# EUROPEAN PATENT APPLICATION

(11) **EP 2 534 939 A1**
(43) Date of publication of application: **19.12.2012**
(21) Application number: 12171950.4
(22) Date of filing: 14.06.2012
(51) Int. Cl.: A01F 25/13, A01F 25/16

(54) **Device for covering a silo**

(30) Priority: 15.06.2011 NL 2006938
(71) Applicant: Hebo Holding B.V., 8517 HH Scharsterburg (NL)
(72) Inventor: Bos, Greorgius Rudolphius Joris, 8701 KM Bolsward (NL); De Vries, Rakesh, 9014 CK Terzool (NL)
(74) Representative: 't Jong, Bastiaan Jacob

(57) **Abstract**

The invention relates to a device (4) for covering a silo comprising two parallel upright walls (1, 2) for storage of material (3) such as animal feed, for instance grass silage, the device comprising:
- a frame (5) with a length corresponding to the distance between the two parallel walls of the silo;
- a shaft (15) which extends over the length of the frame and which is arranged bearing-mounted on the frame;
- a cover sheet (7) which is arranged on the shaft and can be rolled up thereon;
- support means (8, 9, 18) for supporting the frame on the parallel walls and/or on the material,

wherein coupling means (10, 13, 14) are arranged on the frame for coupling the frame to a lifting device (11) of a vehicle, such as a power shovel or telescopic handler (12).

## Description

The invention relates to a device for covering a silo comprising two parallel upright walls for storage of material, such as loose poured material or animal feed or maize, for instance grass silage, the device comprising:
- a frame with a length corresponding to the distance between the two parallel walls of the silo;
- a shaft which extends over the length of the frame and which is arranged bearing-mounted on the frame;
- a cover sheet which is arranged on the shaft and can be rolled up thereon;
- support means for supporting the frame on the parallel walls and/or on the material.

Such a device is known from for instance NL 1032330. Described in this publication is a device for covering a silo, wherein the frame travels on the wall of the silo or travels adjacently of the walls over the silo. This known device preferably has its own energy supply to enable the device to be moved over the silo and in order to roll the cover sheet onto the shaft and unroll it therefrom as desired.

The autonomous embodiment of the prior art device makes the costs of such a device correspondingly high. In addition, the device will require regular maintenance due to its complexity.

In addition, such a prior art device is only suitable for a single silo. When a number of silos are present on a farm premises, the same number of devices will be necessary for covering purposes. Higher costs will be a more important consideration in such a case.

It is now an object of the invention to reduce or even obviate the above stated drawbacks.

This object is achieved according to the invention with a device as according to the preamble, which is **characterized in that** coupling means are arranged on the frame for coupling the frame to a lifting device of a vehicle, such as a power shovel or telescopic handler.

A silo is normally filled with a material such as animal feed, for instance grass silage. This material is usually placed in and removed from the silo by means of a vehicle provided with a lifting arm with a bucket thereon for scooping up the material and subsequently offloading it elsewhere. Such a vehicle can for instance be a power shovel or telescopic handler, or a tractor provided with a lifting arm.

Because the device according to the invention is characterized by coupling means for coupling the frame to the lifting arm of a power shovel or tractor, the device can be displaced easily over the silo with a vehicle that is usually already available. The costs of such a device can hereby remain limited.

A preferred embodiment of the device according to the invention comprises drive means for driving the shaft to enable rolling up or unrolling of the cover sheet.

Although the sheet can optionally be rolled up manually and can unroll by itself by securing one side of the cover sheet and pulling the frame, it is recommended to have the rolling up and unrolling of the sheet take place by means of a drive.

The drive means preferably comprise a hydraulic motor, and the motor is connected to the hydraulic system of the vehicle coupled to the device.

The device can also comprise its own hydraulic system so that the device can produce the required hydraulic pressure independently.

Power shovels, telescopic handlers and tractors are normally provided with a hydraulic system for at least controlling the lifting arm. Using this hydraulic system a hydraulic motor can also be driven which is provided on the frame of the device and which drives the shaft.

In another preferred embodiment of the device according to the invention the shaft can be uncoupled from the frame. It hereby becomes possible to use the frame for a number of silos. In such a case a shaft with a cover sheet is provided per silo. The different silos can then be covered and opened using only one frame by coupling a shaft with cover sheet of a silo to the frame as desired. An optional drive need also be present only once on the frame. This can drastically reduce costs in the case there are a number of silos.

A bearing is preferably arranged pivotally to enable uncoupling of the shaft from the frame. In such a case a shaft can be positioned in the frame, after which the bearing is pivoted and the shaft is once again bearing-mounted in the frame.

In another embodiment of the device according to the invention the support means comprise at least two first legs arranged on either side of the frame for supporting on the walls of the silo.

The device can be laid on or in front of the silo, although the weight of the part of the cover sheet which is rolled up and the weight of the frame press here on the material in the silo. By first providing legs, at least part of the weight can support on the walls of the silo. The legs are preferably adjustable in the length of so that the height of the frame can be adjusted relative to the silo and the material arranged therein. The legs are optionally also displaceable over the length of the frame so that the mutual distance of the legs can be adjusted to the width of the silo.

In yet another embodiment of the device according to the invention the support means comprise at least one second leg arranged on the frame for supporting on the material. The second leg is preferably a U-shaped bracket here.

Owing to the second leg a stable position of the frame on the silo walls can be achieved and the device is prevented from falling forward or backward. A U-shaped bracket further ensures that the weight is uniformly distributed over a part of the surface of the material in the silo.

The U-shaped bracket is preferably provided with a protective layer on the part which comes into contact with the cover sheet. In addition, the U-shaped bracket can have a round cross-section.

In a further preferred embodiment of the device according to the invention the first legs and the second leg are arranged on opposite sides of the frame. A particularly stable support of the device is hereby obtained.

These and other features of the invention are further elucidated with reference to the accompanying drawings.
Figure 1 is a schematic perspective view of an embodiment according to the invention.
Figure 2 is a side view of the device according to figure 1.
Figure 3 shows a detail of the device according to figure 1.

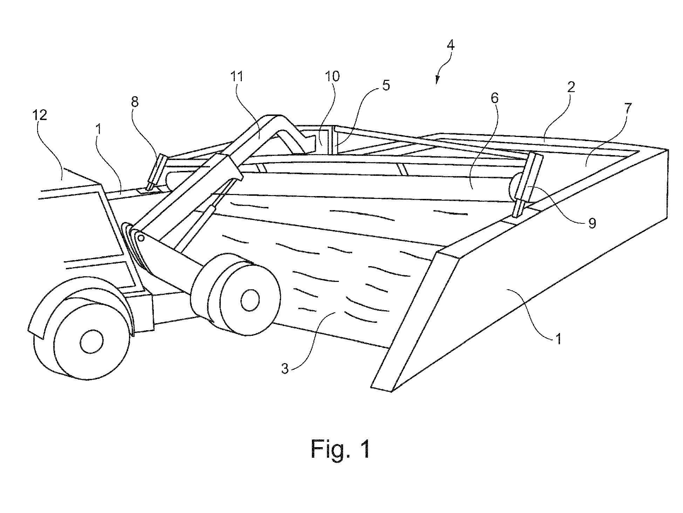

Figure 1 shows a silo 1, 2 with two parallel side walls 1 and a rear wall 2. A material 3, particularly grass silage, is placed in this silo 1, 2.

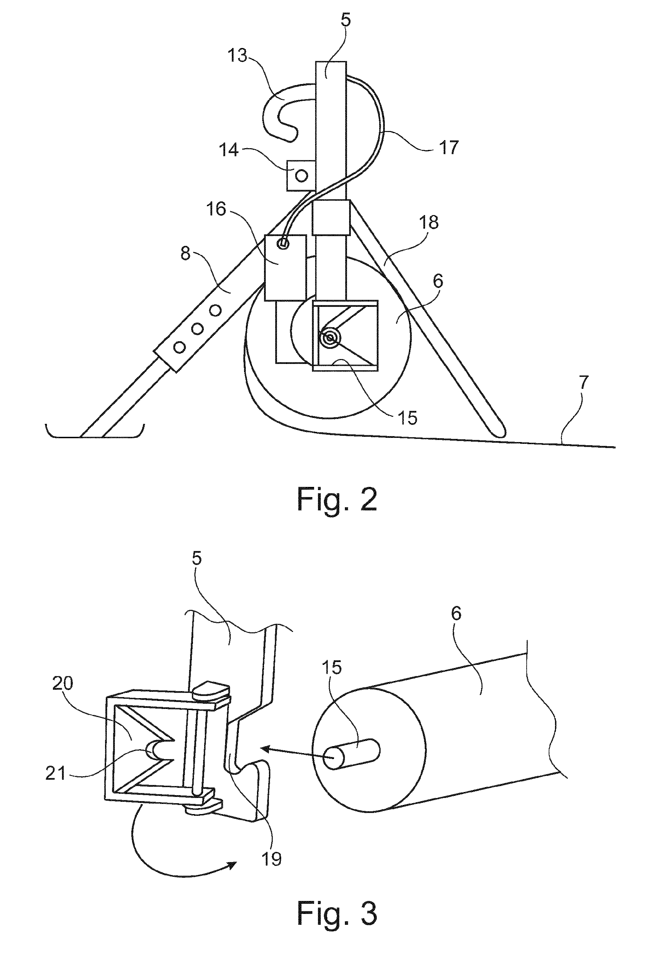

A device 4 according to the invention is placed on side walls 1. This device 4 has a frame 5 with a roll 6 which extends over the length of frame 5 and onto which is wound a cover sheet 7. (See also figure 2).

Frame 5 supports on side walls 1 of the silo by means of first legs 8, 9. These legs 8, 9 are adjustable in the height subject to the desired height of device 4 relative to silo 1, 2.

Frame 5 has a coupling plate 10 so that device 4 can be coupled to lifting arm 11 of a telescopic handler 12. Because device 4 can be coupled to lifting arm 11 of a telescopic handler 12, device 4 can thus be easily moved reciprocally over side walls 1 of silo 1, 2.

Coupling plate 10 has the usual hooks 13 and eyes 14 (see figure 2) with which usual tools, such as a closed bucket, can be coupled to a telescopic handler 12.

Figure 2 shows that roll 6 has a shaft end 15 with which roll 6 is bearing-mounted in frame 5. Provided on at least one side of roll 6 is a motor 16 which engages via a transmission on shaft end 15. Motor 16 can be connected via a hose 17 to the hydraulic system of telescopic handler 12. It is thus possible for the operator of telescopic handler 12 to also control rolling up or unrolling of cover sheet 7.

Figure 2 further shows that arranged on the opposite side of frame 5 relative to first legs 8, 9 is a second leg 18 which supports on cover sheet 7, and thereby on material 3 in silo 8, 9.

Figure 3 shows how roll 6 is bearing-mounted with shaft end 15 in frame 5 such that roll 6 can be uncoupled from frame 5.

Provided in frame 5 is a hook-shaped slot 19 in which shaft end 15 of roll 6 comes to lie. A pivotable locking part 20 is further provided on frame 5. This locking part 20 has a recess 21 corresponding to the shape of shaft end 15. When shaft end 15 lies in hook-shaped slot 19, locking part 20 can be pivoted against shaft end 15, whereby roll 6 is mounted fixedly in frame 5.

When frame 5 has to be used for a different roll 6, roll 6 can be uncoupled by simply pivoting open the locking part 20, and another roll can be fixedly coupled.

Trestles (not shown) are optionally provided for the purpose of supporting shaft ends 15 of an uncoupled roll 6 on side walls 1.

## Claims

1. Device for covering a silo comprising two parallel upright walls for storage of material, such as loose poured material or animal feed, for instance grass silage or maize, the device comprising:
- a frame with a length corresponding to the distance between the two parallel walls of the silo;
- a shaft which extends over the length of the frame and which is arranged bearing-mounted on the frame;
- a cover sheet which is arranged on the shaft and can be rolled up thereon;
- support means for supporting the frame on the parallel walls and/or on the material,
**characterized in that**
coupling means are arranged on the frame for coupling the frame to a lifting device of a vehicle, such as a power shovel or telescopic handler.

2. Device as claimed in claim 1, further comprising drive means for driving the shaft to enable rolling up or unrolling of the cover sheet.

3. Device as claimed in claim 2, wherein the drive means comprise a hydraulic motor, and wherein the motor is connected to the hydraulic system of the vehicle coupled to the device.

4. Device as claimed in any of the foregoing claims, wherein the shaft can be uncoupled from the frame.

5. Device as claimed in claim 4, wherein a bearing is arranged pivotally to enable uncoupling of the shaft from the frame.

6. Device as claimed in any of the foregoing claims, wherein the support means comprise at least two first legs arranged on either side of the frame for supporting on the walls of the silo.

7. Device as claimed in any of the foregoing claims, wherein the support means comprise at least one second leg arranged on the frame for supporting on the material.

8. Device as claimed in claim 7, wherein the second leg is a U-shaped bracket.

9. Device as claimed in claims 6 and 7, wherein the first legs and the second leg are arranged on opposite sides of the frame.
